(19) Europäisches Patentamt

European Patent Office

Office européen des brevets

(11) EP 1 199 316 A2

(12) EUROPEAN PATENT APPLICATION

(43) Date of publication:
24.04.2002 Bulletin 2002/17

(51) Int Cl.$^7$: C08F 4/40, C08F 2/22

(21) Application number: 01308600.4

(22) Date of filing: 09.10.2001

(84) Designated Contracting States:
AT BE CH CY DE DK ES FI FR GB GR IE IT LI LU
MC NL PT SE TR
Designated Extension States:
AL LT LV MK RO SI

(30) Priority: 22.06.2001 US 887929
17.10.2000 US 240904 P

(71) Applicant: ROHM AND HAAS COMPANY
Philadelphia, Pennsylvania 19106-2399 (US)

(72) Inventors:
• Lorah, Dennis Paul
Lansdale, Pennsylvania 19446 (US)
• Slone, Robert Victor
Quaker, Pennsylvania 18951 (US)

(74) Representative: Kent, Venetia Katherine
Rohm and Haas (UK) Ltd
European Operations Patent Dept.
Lennig House
2 Mason's Avenue
Croydon, CR9 3NB (GB)

(54) **Redox process for preparing emulsion polymer having low formaldehyde content**

(57) A process for preparing an aqueous emulsion polymer including providing at least one ethylenically unsaturated monomer and a free radical redox initiator system under emulsion polymerization conditions, the redox initiator system composed of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of the ethylenically unsaturated monomer is provided. Also provided is a process for reducing the residual ethylenically unsaturated monomer content of an aqueous emulsion polymer.

EP 1 199 316 A2

**Description**

This invention relates to a redox process for preparing an emulsion polymer having low formaldehyde content. More particularly, this invention relates to a process for preparing an aqueous emulsion polymer including providing at least one ethylenically unsaturated monomer and a free radical redox initiator system under emulsion polymerization conditions, the redox initiator system including t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of the ethylenically unsaturated monomer. And the invention also relates to a process for reducing the residual monomer content of an emulsion polymer.

Redox initiator systems incliding at least one oxidizing agent and at least one reducing agent and, optionally, a metal promotor species are advantageously used in the emulsion polymerization of ethylenically unsaturated monomers, particularly if polymerization at temperatures lower than those at which conventional thermal initiation systems provide an effective level of free radical production such as at temperatures below 85 °C is desired. However, some oxidizing agents and some reducing agents disadvantageously effect the formation of formaldehyde in the emulsion polymer. For example, the commonly used reducing agent sodium sulfoxylate formaldehyde and the commonly used oxidizing agent t-butyl hydroperoxide may each generate formaldehyde during emulsion polymerization in which thay are part of the initiator system. The present invention serves to provide redox emulsion polymerization processes which desirably lead to lowered formaldehyde levels when compared with processes using alternative redox initiator systems.

US Patent No. 5,540,987 discloses emulsion polymers including certain copolymerized formaldehyde-generating crosslinking monomers having lowered free formaldehyde content by use of an initiator system including a hydrophobic hydroperoxide, preferably t-butyl hydroperoxide, oxidizing agent and the specific reducing agent, ascorbic acid. Improvements in lowering formaldehyde content are still sought.

It has now been surprisingly found that lowered formaldehyde levels are found in emulsion polymerization of ethylenically unsaturated monomers when certain free radical redox initiator systems are used under emulsion polymerization conditions, the redox initiator systems including t-alkyl hydroperoxide, t-alkyl peroxide, or t-alkyl perester wherein the t-alkyl group includes at least 5 Carbon atoms and any non-formaldehyde-forming reducing agent. An improvement is found in reducing residual monomer at the end of a conventional emulsion polymerization as well as in an emulsion polymerization.

In a first aspect of the present invention there is provided a process for preparing an aqueous emulsion polymer including providing at least one ethylenically unsaturated monomer and a free radical redox initiator system under emulsion polymerization conditions, the redox initiator system composed of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of the ethylenically unsaturated monomer.

In a second aspect of the present invention there is provided a process for reducing the residual ethylenically unsaturated monomer content of an aqueous emulsion polymer including contacting the aqueous emulsion polymer with a free radical redox initiator system, the redox initiator system composed of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of the residual ethylenically unsaturated monomer.

The process for preparing an aqueous emulsion polymer of this invention includes providing at least one ethylenically unsaturated monomer and a free radical redox initiator system under emulsion polymerization conditions.

The aqueous acrylic emulsion polymer contains, as copolymerized unit(s), at least one copolymerized monoethylenically-unsaturated (meth)acrylic monomer including esters, amides, and nitriles of (meth)acrylic acid, such as, for example, (meth)acrylic ester monomer including methyl acrylate, ethyl acrylate, butyl acrylate, 2-ethylhexyl acrylate, decyl acrylate, lauryl acrylate, stearyl acrylate, methyl methacrylate, butyl methacrylate, hydroxyethyl methacrylate, hydroxypropyl methacrylate, aminoalkyl (meth)acrylate, N-alkyl aminoalkyl (methacrylate), N,N-dialkyl aminoalkyl (meth)acrylate; urieido (meth)acrylate; (meth)acrylonitrile and (meth)acrylamide; styrene or alkyl-substituted styrenes; butadiene; vinyl acetate, vinyl propionate, or other vinyl esters; vinyl monomers such as vinyl chloride, vinylidene chloride, and N-vinyl pyrollidone; allyl methacrylate, diallyl phthalate, 1,3-butylene glycol dimethacrylate, 1,6-hexanedioldiacrylate, and divinyl benzene; (meth)acrylic acid, crotonic acid, itaconic acid, sulfoethyl methacrylate, phosphoethyl methacrylate, fumaric acid, maleic acid, monomethyl itaconate, monomethyl fumarate, monobutyl fumarate, and maleic anhydride. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively.

The free radical addition polymerization techniques used to prepare the acrylic emulsion polymer of this invention are well known in the art. Conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer.

A redox initiator system composed of t-alkyl hydroperoxide, t-alkyl peroxide, or t-alkyl perester wherein the t-alkyl group includes at least 5 Carbon atoms oxidizing agent and a non-formaldehyde-forming reducing agent is used. Preferred is a redox initiator system composed of t-amyl hydroperoxide oxidizing agent and a non-formaldehyde-forming reducing agent At least one non-formaldehyde-forming reducing agent such as, for example, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, ascorbic acid, isoascorbic acid, lactic acid, glyceric acid, malic acid, 2-hydroxy-2-sulfinatoacetic acid, tartaric acid and salts of the preceding acids typically at a level of 0.01% to 3.0% by weight, based on monomer weight, is used. Preferred reducing agents are isoascorbic acid, sodium metabisulfite, and 2-hydroxy-2-sulfinatoacetic acid.

The present invention may also be practiced with mixtures of oxidants to maintain the desired minimal formaldehyde level. These mixtures may include tertiary-amylhydroperoxide along with hydrogen peroxide, ammonium persulfate and the like. In certain embodiments of the present invention, it is advantageous to choose a mixture containing a hydrophilic oxidant and the hydrophobic oxidant tert-amylhydroperoxide to increase the overall efficiency of the initiator system with regard to the initiation of the full range of hydrophilic and hydrophobic monomers.

Typically, 0.01% to 3.0% by weight, based on monomer weight, of t-amylhydroperoxide oxidizing agent is used. Redox reaction catalyzing metal salts of iron, copper, manganese, silver, platinum, vanadium, nickel, chromium, palladium, or cobalt may optionally be used, with or without metal complexing agents. The oxidant and reductant are typically added to the reaction mixture in separate streams, preferably concurrently with the monomer mixture. The reaction temperature is maintained at a temperature lower than 100 °C throughout the course of the reaction. Preferred is a reaction temperature between 30 °C and 95 °C, more preferably between 50 °C and 90 °C. The monomer mixture may be added neat or as an emulsion in water. The monomer mixture may be added in one or more additions or continuously, linearly or not, over the reaction period , or combinations thereof.

Further, a chain transfer agent such as, for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate in an amount of 0.1 to 6.0 % by weight based on monomer weight may be used. Linear or branched $C_4$-$C_{22}$ alkyl mercaptans such as n-dodecyl mercaptan and t-dodecyl mercaptan are preferred. Chain transfer agent(s) may be added in one or more additions or continuously, linearly or not, over most or all of the entire reaction period or during limited portion(s) of the reaction period such as, for example, in the kettle charge and in the reduction of residual monomer stage.

However, at least some, preferably at least 40% by weight, more preferably at least 75% by weight, most preferably at least 95% by weight, based on dry polymer weight, of the emulsion polymer is formed using the redox initiator system composed of t-alkyl hydroperoxide, t-alkyl peroxide, or t-alkyl perester wherein the t-alkyl group includes at least 5 Carbon atoms and a non-formaldehyde-forming reducing agent in the absence of any other oxidizing agent and in the absence of any other reducing agent. The emulsion polymerization is contemplated to include embodiments where some of the polymer is introduced by a polymer seed, formed in situ or not, or formed during hold periods or formed during periods wherein the monomer feed has ended and residual monomer is being converted to polymer.

In another aspect of the present invention the emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multistaged emulsion polymer may contain the same monomers, surfactants, chain transfer agents, etc. as disclosed hereinabove for the emulsion polymer. The polymerization techniques used to prepare such multistage emulsion polymers are well known in the art such as, for example, US Patents No. 4,325,856; 4,654,397; and 4,814,373.

The emulsion polymer has an average particle diameter from 20 to 1000 nanometers, preferably from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size emulsion polymers wherein two or more distinct particle sizes or very broad distributions are provided as is taught in US Patents No. 5,340,858; 5,350,787; 5,352,720; 4,539,361; and 4,456,726.

The glass transition temperature ("Tg") of the emulsion polymer is typically from -80 °C to 140 °C, preferably from -20 C to 50 C, the monomers and amounts of the monomers selected to achieve the desired polymer Tg range are well known in the art. Tgs used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.)= w(M1)/Tg(M1) + w(M2)/Tg(M2)$$

, wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The glass transition temperatures of homopolymers may be found, for example, in "Polymer Handbook", edited by J. Brandrup and E.H. Immergut, Interscience Publishers.

In the second aspect of the present invention there is provided a process for reducing the residual ethylenically unsaturated monomer content of an aqueous emulsion polymer including contacting the aqueous emulsion polymer with a free radical redox initiator system, the redox initiator system composed of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of the residual ethylenically unsaturated monomer. The emulsion polymer of this aspect includes compositions, Tg, and particle sizes as described and exemplified hereinabove, prepared with the redox initiator system of this invention or any other free radical initiator means such as, for example, by thermal initiation and photoinitiation having a residual ethylenically unsaturated monomer content. The residual ethylenically unsaturated monomer content will typically be less than 5%, preferably less than 1%, by weight based on polymer weight. The emulsion polymer is then contacted with a redox initiator system composed of t-alkyl hydroperoxide, t-alkyl peroxide, or t-alkyl perester wherein the t-alkyl group includes at least 5 Carbon atoms and a non-formaldehyde-forming reducing agent, in composition and amounts as described and exemplified herein above and the polymerization of at least some, preferably at least 50%, more preferably at least 90%, of the residual ethylenically unsaturated monomer is effected under conditions as described hereinabove.

The emulsion polymer of this invention and the emulsion polymer having reduced residual monomer of this invention may be used in paints, paper coatings, leather coatings, adhesives, nonwoven and paper saturants, and the like.

The following examples are presented to illustrate the invention and the results obtained by the test procedures.

EXAMPLE 1. Formaldehyde generation concurrent with reduction of residual monomer.

A series of samples were prepared which consisted of a preformed polymer seed, a known quantity of monomer, and a redox initiator system. Free formaldehyde levels were determined using HPLC; Residual monomer levels were determined using gas chromatography. To each vial was added 30 g acrylic dispersion polymer at 45% solids and 15 g distilled water. Then, 0.30 g 0.15% ferrous sulfate solution was added followed by 0.20 g butyl acrylate. The oxidant and reductant solutions were added sequentially according to Table 1.1: All were shaken overnight at room temperature. All samples then contained residual monomer levels below 10 ppm. Formaldehyde levels are presented in Table 1.2.

Table 1.1.

| Charge List for Latex Samples. | | | | |
|---|---|---|---|---|
| Sample | Oxidizing Agent | Amount (g) | Reducing Agent | Amount (g) |
| Comp. A | *t*-BHP | 0.0386 | IAA | 0.0264 |
| Comp. B | *t*-BHP | 0.0386 | MBS | 0.0143 |
| Comp.C | *t*-BHP | 0.0386 | SHSAA | 0.0294 |
| Comp. D | *t*-BHP | 0.0386 | SSF | 0.0231 |
| 1 | *t*-AHP | 0.0367 | IAA | 0.0264 |
| 2 | *t*-AHP | 0.0367 | MBS | 0.0143 |

Table 1.1.   (continued)

| Charge List for Latex Samples. | | | | |
|---|---|---|---|---|
| Sample | Oxidizing Agent | Amount (g) | Reducing Agent | Amount (g) |
| 3 | *t*-AHP | 0.0367 | SHSAA | 0.0294 |
| Comp. E | *t*-AHP | 0.0367 | SSF | 0.0231 |
| NOTES: t-BHP= t-butyl hydroperoxide, 70% aqueous solution; t-AHP= t-amyl hydroperoxide, 83% in *t*-amyl alcohol; IAA= isoascorbic acid; MBS=sodium metabisulfite; SSF= sodium sulfoxylate formaldehyde SHSAA= sodium 2-hydroxy-2-sulfinatoacetic acid (50% by weight) | | | | |

Table 1.2 .

| Latex Sample Formaldehyde Data. | | | | |
|---|---|---|---|---|
| Sample | Oxidizing Agent | Reducing Agent | Formaldehyde* (ppm) | Additional Formaldehyde* (ppm) |
| Acrylic Latex | | | 4.2 | |
| | | | | |
| Comp.A | *t* -BHP | IAA | 7.7 | 3.5 |
| Comp.B | *t* -BHP | NaMBS | 6.5 | 2.3 |
| Comp.C | *t* -BHP | SHSAA | 8.9 | 4.7 |
| Comp.D | *t* -BHP | SSF | 89.0 | 84.8 |
| | | | | |
| 1 | *t* -AHP | IAA | 4.4 | 0.2 |
| 2 | *t* -AHP | NaMBS | 4.6 | 0.4 |
| 3 | *t* -AHP | SHSAA | 4.7 | 0.5 |
| Comp.E | *t* -AHP | SSF | 97.7 | 93.3 |

NOTES: *Free formaldehyde; data obtained by HPLC. 0.4% BA on batch; 0.2% t-BHP on mmr; t-AHP is equimolar. 0.17% SSF on mmr; other reducing agents are equimolar.

Examples 1-3 of this invention exhibit lower formaldehyde and additional formaldehyde levels compared to those of Comparative Examples A-E.

**Claims**

1. A process for preparing an aqueous emulsion polymer comprising providing at least one ethylenically unsaturated monomer and a free radical redox initiator system under emulsion polymerization conditions, said redox initiator system consisting essentially of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of said ethylenically unsaturated monomer.

2. The process of claim 1 wherein said redox initiator system further comprises a redox reaction catalyzing metal salt and, optionally, a metal complexing agent.

3. The process of claim 1 wherein said non-formaldehyde-forming reducing agent is selected from the group consisting of isoascorbic acid, sodium metabisulfite, sodium bisulfite, sodium dithionite, and sodium 2-hydroxy-2-sulfinatoacetic acid.

4. The process of claim 1 wherein the polymerization of at least 95% by weight of said ethylenically unsaturated monomer is effected.

**5.** A process for reducing the residual ethylenically unsaturated monomer content of an aqueous emulsion polymer comprising contacting said aqueous emulsion polymer with a free radical redox initiator system, said redox initiator system consisting essentially of t-alkyl hydroperoxide, t-alkyl peroxide, or t-alkyl perester wherein the t-alkyl group includes at least 5 Carbon atoms and a non-formaldehyde-forming reducing agent; and effecting the polymerization of at least some of said residual ethylenically unsaturated monomer.

**6.** The process of claim 5 wherein said redox initiator system further comprises a redox reaction catalyzing metal salt and, optionally, a metal complexing agent.

**7.** The process of claim 5 wherein said non-formaldehyde-forming reducing agent is selected from the group consisting of isoascorbic acid, sodium metabisulfite, sodium bisulfite, sodium dithionite, and sodium 2-hydroxy-2-sulfinatoacetic acid.

**8.** The process of claim 5 wherein the polymerization of at least 90% by weight of said residual ethylenically unsaturated monomer is effected.